Europäisches Patentamt

European Patent Office

Office européen des brevets

Publication number: **0 299 166**
**A1**

## EUROPEAN PATENT APPLICATION

(21) Application number: 88107845.5

(22) Date of filing: 16.05.88

(51) Int. Cl.4: **F28G 9/00** , **C23G 1/08** , **C23G 1/19** , **C23G 1/24** , **C02F 5/08**

(30) Priority: 17.07.87 JP 177165/87
17.07.87 JP 177166/87
16.12.87 JP 316052/87

(43) Date of publication of application:
18.01.89 Bulletin 89/03

(84) Designated Contracting States:
CH DE FR GB LI

(71) Applicant: **MITSUBISHI JUKOGYO KABUSHIKI KAISHA**
5-1, Marunouchi 2-chome Chiyoda-ku
Tokyo 100(JP)

(72) Inventor: **Kaneko, Shozo Nagasaki Shipyard & Engine Works**
**Mitsubishi Jukogyo K.K. 1-1, Akunoura-machi**
**Nagasaki-shi Nagasaki-ken(JP)**
Inventor: **Shinmura, Akihiro Nagasaki**
**Shipyard & Engine**
**Works Mitsubishi Jukogyo KK 1-1,**
**Akunoura-machi**
**Nagasaki-shi Nagasaki-ken(JP)**
Inventor: **Ishida, Mitsuhiko Nagasaki Shipyard**
**& Engine**
**Works Mitsubishi Jukogyo KK 1-1,**
**Akunoura-machi**
**Nagasaki-shi Nagasaki-ken(JP)**
Inventor: **Hayashi, Yukio Nagasaki Tech.**
**Institute of**
**Mitsubishi Jukogyo KK 1-1, Akunoura-machi**
**Nagasaki-shi Nagasaki-ken(JP)**
Inventor: **Furusawa, Taketoshi Nagasaki Tech.**
**Institute of**
**Mitsubishi Jukogyo KK 1-1, Akunoura-machi**
**Nagasaki-shi Nagasaki-ken(JP)**
Inventor: **Nakayama, Yutaka Nagasaki Tech.**
**Institute of**
**Mitsubishi Jukogyo KK 1-1, Akunoura-machi**
**Nagasaki-shi Nagasaki-ken(JP)**

(74) Representative: **Henkel, Feiler, Hänzel & Partner**
**Möhlstrasse 37**
**D-8000 München 80(DE)**

(54) Method for removing scale on inner surfaces of boiler tube members.

(57) An improved method for removing scale on inner surfaces of boiler outlet tube members is disclosed. The

improvements reside in the steps, in combination, consisting of cutting either a main steam tube (4) or a tube member on the upstream of an inlet portion of a main steam tube (4) (for instance, a connecting pipe on the inlet side of a superheater), temporarily disposing a blocking plate (10) for preventing liquid from flowing into the side of a turbine in a main steam blocking valve (6) on the inlet side of the turbine, thereafter connecting the cut end portion of the cut tube member on the side connected to the main steam blocking valve (6) with one end portion of a temporary piping (8) provided with a circulating pump (a), connecting the other end of the temporary piping (8) with the main steam blocking valve (6) to form a circulation route by the cut tube member and the temporary piping (8), and circulating a chemical detergent liquid through the circulation route. A preferable method for preparing the chemical detergent liquid and a preferable temperature condition for circulating a particular chemical detergent liquid are also disclosed.

## METHOD FOR REMOVING SCALE ON INNER SURFACES OF BOILER TUBE MEMBERS

BACKGROUND OF THE INVENTION:

Field of the Invention:

The present invention relates to a descaling method for surely and perfectly removing scale produced on an inner surface of a boiler outlet main steam tube or on inner surfaces of a main steam tube and a boiler superheater.

Description of the Prior Art:

Heretofore, peeled scale has been ejected to the outside of a boiler system by executing "flee blow" (the operation of partly passing steam) before a boiler starts an operation, but a method of removing fixedly secured scale, especially Cr-Mo scale was not practiced.

In a superheater tube and an outlet main steam tube of a high-temperature high-pressure boiler which has continued to operate for several years, there was a problem that hard steam-oxidized scale of Cr-Mo was produced on their inner surfaces due to use of Cr-Mo steel tubings, hence as time elapses the hard Cr-Mo scale on the inner surfaces of the tubings would disperse and would cause abrasion of an inlet nozzle and blades of a turbine, resulting in lowering of an efficiency of the turbine, and also various valves would be damaged.

Also, a method of circulating a detergent liquid throughout the boiler may be conceived, but SUS materials are used for the elements and the like within a boiler, and so, they are liable to be subjected to detergent shock (corrosion cracking). Therefore, in the case of scale adhering onto a heat transfer surface such as a boiler evaporation tube surface, while a method of resolving and removing scale by making use of a solution of monoammonium citrate, a solution of citric acid added and mixed with hydroxy acetic acid or formic acid, or a solution of ammonium polyaminocarboxylate, has been generally practiced, the above-described method of circulating the detergent liquid capable of washing steam-oxidized scale of Cr-Mo throughout a boiler, could not employed.

SUMMARY OF THE INVENTION:

The present invention has been worked out in view of the above-mentioned status of the art at present, and it is a principal object of the present invention to provide a method for removing scale on inner surfaces of boiler tube members which can perfectly and efficiently remove scale on inner surfaces of a boiler outlet main steam tube and which does not influence the portion liable to be subjected to a detergent shock.

According to one feature of the present invention, there is provided a method for removing scale on inner surfaces of boiler outlet tube members consisting of the steps of cutting a tube member at least on the upstream side of an inlet portion of a main steam tube on the outlet side of a boiler, that is, either cutting a main steam tube or cutting a tube member on the upstream of an inlet portion of a main steam tube (for instance, cutting a connecting pipe on the inlet side of a superheater), temporarily disposing a blocking plate for preventing liquid from flowing into the side of a turbine in a main steam blocking valve on the inlet side of the turbine, thereafter connecting the cut end portion of the cut tube member on the side connected to the main steam blocking valve with one end portion of a temporary piping provided with a circulating pump, connecting the other end of the temporary piping with the main steam blocking valve to form a circulation route by the cut tube member and the temporary piping, and circulating a chemical detergent liquid through the circulation route.

Since the hard steam-oxidized scale is produced on inner surfaces of a main steam tube and a superheater tube on the outlet side of a boiler, according to the present invention, these portions are chosen as an object to be subjected to chemical washing, and upon washing a tube member at least on the upstream side of an inlet portion of a main steam tube on the outlet side of a boiler is cut, a blocking plate for preventing liquid from flowing into the side of a turbine is temporarily disposed in a main steam blocking valve on the inlet side of the turbine. thereafter a temporary piping is mounted to the tube member on the side connected to the main steam blocking valve to form a circulation route, and a chemical detergent liquid is circulated by means of a circulating pump to melt and remove scale in the tubes, as described above. In this way, while flowing of a detergent liquid into other portions of a boiler is perfectly prevented to protect the portions made of SUS materials on the boiler side, scale produced of inner surfaces of the tubes can be removed.

The above-mentioned and other objects, features and advantages of the present invention will become more apparent by reference to the following description of preferred embodiments of the invention taken in conjunction with the accompanying drawings.

BRIEF DESCRIPTION OF THE DRAWINGS:

In the accompanying drawings:

Fig. 1(a) is a schematic perspective view showing one preferred embodiment of the present invention;

Fig. 1(b) is an enlarged cross-section view showing an adapter for mounting a temporary piping to be used in the method for removing scale illustrated in Fig. 1(a);

Fig. 1(c) is an enlarged cross-section view showing a main steam blocking valve in the piping system shown in Fig. 1(a); and

Fig. 2 is a schematic perspective view similar to Fig. 1(a) showing another preferred embodiment of the present invention.

DESCRIPTION OF THE PREFERRED EMBODIMENTS:

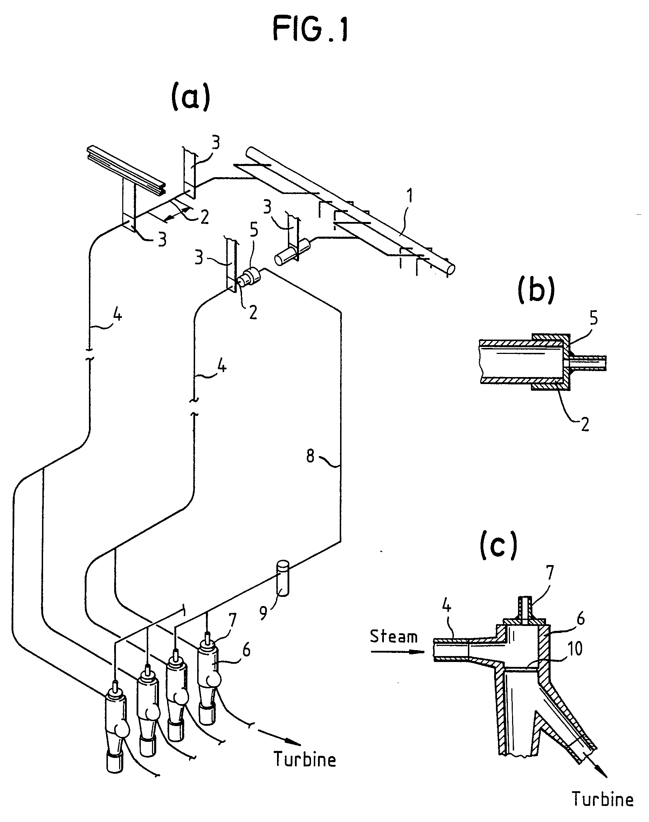

Now description will be made on the successive steps in the method for removing scale on inner surfaces of boiler tube members according to one preferred embodiment of the present invention with reference to Figs. 1(a), 1(b) and 1(c).

(1) In order to cut main steam tubes 4 at their cutting sections 2 on the downstream side of a final superheater outlet header 1, fixing devices 3 are mounted prior to cutting of the main steam tubes to fix the forth and the rear of the cutting sections 2, and thereby vibration of the cutting sections caused by reaction forces of the piping can be prevented. The main steam tubes 4 are cut by means of a beveling machine (a machine for performing beveling work simultaneously with cutting), and adapters 5 for mounting temporary pipings are attached to the cut ends of the main steam tubes 4.

(2) A main steam blocking valve 6 at an inlet portion of a turbine is opened, a blind lid for preventing steam from flowing into the turbine is mounted in that valve, an adapter 7 for mounting a temporary piping is attached to the same main steam blocking valve 6, the adpter 5 for mounting the temporary piping at the outlet portion of the boiler and the adapter 7 for mounting the temporary piping are connected with each other through a temporary piping 8 provided with a circulating pump 9 to form a circulation route, and solution and removal of scale are effected by circulating a chemical detergent liquid through the circulation route by means of the circulating pump 9.

(3) After washing, the adapter 5 for mounting the temporary piping is dismounted from the "main steam tube cutting section 2", a robot for inspecting tube inner surfaces is inserted into the main steam tube. and the effect of washing is checked.

(4) Though the scale would be gradually solves in the detergent liquid by the circulation of the chemical detergent liquid, a strainer (filter) could be provided in the temporary piping 8 forming the circulation route for the purpose of removing blocks of scale and foreign matters.

It is to be noted that ports for injecting and ejecting the chemical detergent liquid are omitted from illustration in Fig. 1(a).

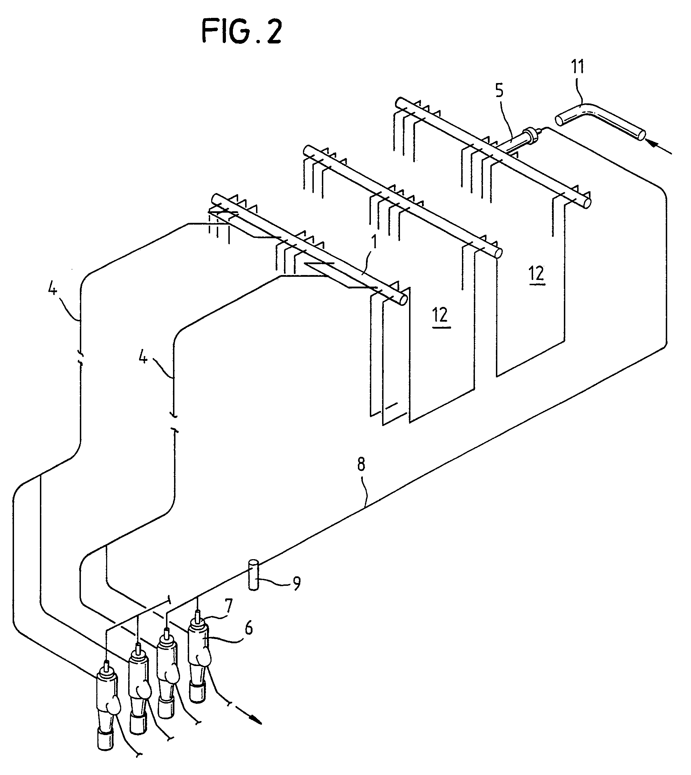

Another preferred embodiment of the present invention is illustrated in Fig. 2. In the case where Cr-Mo steel tubings are used as a material of superheaters 12 as is the case with the main steam tubes 4, like the above-described first preferred embodiment, a superheater inlet tube 11 is cut, an adapter 5 for mounting a temporary piping is attached to the same superheater inlet tube 11, also like the above-described first preferred embodiment, an adapter 7 for mounting a temporary piping is attached to the main steam blocking valve 6 at the inlet of the turbine as shown in Fig. 1(c), and the above-mentioned both adapters 5 and 7 are connected with each other via a temporary piping 8 provided with a circulating pump 9. Consequently, a circulation route consisting of the superheater 12, the main steam tubes 4, the main steam blocking valves 6 and the temporary piping 8 is established, and solution and removal of scale can be effected by circulating a chemical detergent liquid through the circulation route by means of the pump 9.

The structure of steam-oxidized scale on the inner surfaces of superheater tubes and main steam tubes making use of Cr-Mo steel tubings is composed of two layers, that is, an outer layer and an inner layer, if divided generally, and while the outer layer principally consists of almost pure magnetite ($Fe_3O_4$) that is hard and dense, the inner layer consists of spinel type oxides principally containing Cr (in the case where the material of the tubings is austenite series stainless steel) or spinel type oxides containing Cr, Mo and Si (in the case where the material of the tubings is ferrite series stainless steel).

The steam oxidized scale containing these hardly soluble metal oxides or spinel type metal oxides has high chemical stability due to a dense crystalline structure and forms hardly soluble scale, especially steam-oxidized scale on the inner surfaces of superheater tubes and main steam tubes in a boiler is extremely difficult to be solved and removed in the above-described manner because it entirely consists of the hardly soluble scale, and so, in the prior art there was no record that such scale was solved and removed by chemical washing, as described previously.

As a first preferred embodiment of the detergent liquid used in the method according to the present invention, a mixture liquid prepared by adding at least one compound selected from a group consisting of aqueous ammonia, ammonia gas, morpholine, cyclohexyl amine, monoethanol amine, diethanol amine, and triethanol amine to polyaminocarboxylic acid to adjust its pH to 3.5 - 5.5, further adding hydrated hydrazine to the adjusted liquid to readjust its pH to 4 - 6 and adding a corrosion inhibitor to the readjusted liquid, is used.

This detergent liquid is circulated through the circulation route shown in Fig. 1 or 2.

As effective polyaminocarboxylic acid in the above-described detergent liquid, for example, ethylenediamine-tetraacetic acid (EDTA), diethylenetriamine-pentaacetic acid (DTPA), nitrotriacetic acid (NTA) and hydroxyethylethylenediamine-tetraacetic acid (HEDTA) are used. A slurry concentration of these polyaminocarboxylic acids is determined depending upon the amount of steam-oxidized scale produced and adhering to the inner surfaces of boiler superheater tubes and main steam tubes, and since it takes generally 7 - 8 years after start of operation of a boiler until a peel-off phenomenon of steam-oxidized scale arises though it will be different depending upon a steam temperature and a number of times of start and stop, judging the amount of scale on the basis of an elapsed time, 10 - 30 weight % is necessary.

In addition, by adding an amine group alkali agent such as aqueous ammonia, ammonia gas, morpholine, cyclohexyl amine, monoethanol amine, diethanol amine and triethanol amine to the above-described polyaminocarboxylic acid to adjust its pH to 3.5 - 5.5, the polyaminocarboxylic acid is transformed into the form of salt, and thereby it is used as a chelating agent which can easily form chelate with the metal forming the scale.

Furthermore, upon washing by means of the above-described detergent liquid, it is necessary to add a corrosion inhibitor, and as the corrosion inhibitor, any well-known corrosion inhibitor can be appropriately chosen for use, so long as it reveals an adsorption effect for a metal surface and can sufficiently achieve a corrosion inhibit effect. For instance, an organic amine group inhibitor (trade name "HIBIRON K400" manufactured by SUGIMURA Chemical Industry Co., Ltd.) can be used, and its concentration for use of 0.3 weight % is sufficient.

The above-mentioned detergent liquid is injected into and circulated through superheater tubes and main steam tubes in a boiler as described above, preferably it is circulated at a temperature in the range of 85 - 100°C, and thereby hardly soluble scale is solved and removed.

The mechanism of solving scale by means of the above-described detergent liquid is considered to be such that in view of the fact that the solving power for scale is remarkably enhanced by adding hydrated hydrazine to adjust its pH, since $FeY^-$ (ferric polyaminocarboxylate) produced as a result of scale being solved by a chelation effect of polyaminocarboxylate is successively reduced to $FeY^{2-}$ (ferrous polyaminocarboxylate), the surface of the scale is always held in a reduced state, and thereby solution of scale by polyaminocarboxylate can be strongly promoted.

As one example of the above-described detergent liquid, a chemical detergent liquid was prepared by adding aqueous ammonium to 10 weight % aqueous slurry of ethylenediamine-tetraacetic acid (EDTA) to adjust its pH to 4.5, then adding hydrated hydrazine to the adjusted liquid to readjust its pH to 5.5 and further adding 0.3 weight % of "HIBIRON K400" serving as a corrosion inhibitor. This chemical detergent liquid was circulated at a temperature of 90°C - 95°C for 20 hours through the circulation route shown in Fig. 1. Thereafter when the inner surface of the main steam tube was inspected, it was confirmed that hardly soluble scale produced and adhered to the inner surface of the main steam tube had been almost perfectly solved and removed.

Results of tests conducted for the purpose of estimating a solving power for scale of the above-described detergent liquid will be described with reference to Table-1.

400 m ℓ of each detergent liquid shown in Table-1 was poured into an Erlenmeyer flask associated with a reflux condenser, then 5.6 g (if perfectly solved, 10,000 ppm Fe is resulted) of steam-oxidized scale (scale thickness: about 0.5 mm) produced and adhered to the inner surfaces of main steam tubes of a practically used boiler was put in the flask, and after a solving test was conducted at the temperature for the time indicated in Table-1 in a glycerol bath while being continuously stirred by means of a stirrer, a solved amount of steam-oxidized scale (as Fe) was measured.

Also, as a contrast, a similar test was conducted for an acidic liquid which has been heretofore used for washing evaporation tubes in a boiler, and the test results were compared in Table-1.

EP 0 299 166 A1

Table - 1

| Examples | | Organic Acid & Inhibitor | Composition of Detergent Liquid | | Washing Temperature (°C) | Washing Time (hr.) | Solved Amount of Steam-Oxidized Scale as Fe (ppm) | Proportion of Solution (%) |
|---|---|---|---|---|---|---|---|---|
| | | | pH Adjusting Agent | | | | | |
| | | | Amine Group Alkali Agent | Hydrated Hydrazine | | | | |
| Preferred Embodiments | 1 | NTA 10% HIBIRON K400 0.3% | Aqueous Ammonia pH 3.5 | pH 4.0 | 90 – 95 | 20 | 8900 | 89.0 |
| | 2 | | | " 4.5 | " | " | 9680 | 96.8 |
| | 3 | | | " 5.0 | " | " | 9940 | 99.4 |
| | 4 | EDTA 10% HIBIRON K400 0.3% | Aqueous Ammonia pH 4.5 | pH 5.0 | 90 – 95 | 20 | 8820 | 88.2 |
| | 5 | | | " 5.5 | " | " | 9260 | 92.6 |
| | 6 | | | " 6.0 | 95 – 100 | " | 7980 | 79.8 |
| | 7 | DTPA 10% HIBIRON K400 0.3% | Aqueous Ammonia pH 5.5 | pH 6.0 | " | 20 | 7460 | 74.6 |
| | 8 | EDTA 10% | Morpholine pH 4.5 | pH 5.0 | 90 – 95 | 20 | 8950 | 89.5 |
| | 9 | | | " 5.5 | " | " | 9380 | 93.8 |
| | 10 | | | " 6.0 | 95 – 100 | " | 8200 | 82.0 |
| | 11 | HIBIRON K400 0.3% | Cyclohexyl Amine pH 4.5 | pH 5.0 | 90 – 95 | 20 | 9220 | 92.2 |
| | 12 | | | " 5.5 | " | " | 9560 | 95.6 |
| | 13 | | | " 6.0 | 95 – 100 | " | 8240 | 82.4 |
| | 14 | DTPA 10% HIBIRON K400 0.3% | Diethanol Amine pH 4.5 | pH 5.0 | 90 – 95 | 20 | 9280 | 92.8 |
| | 15 | | | " 5.5 | " | " | 9690 | 96.9 |
| | 16 | | | " 6.0 | 95 – 100 | " | 8260 | 82.6 |
| Contrasts | 17 | NTA 10% HIBIRON K400 0.3% | Aqueous Ammonia pH 3.5 | not added | 95 – 100 | 25 | 540 | 5.4 |
| | 18 | EDTA 10% HIBIRON K400 0.3% | Aqueous Ammonia pH 4.5 | not added | 95 – 100 | 25 | 590 | 5.9 |
| | 19 | DTPA 10% | Aqueous Ammonia pH 5.5 | not added | 95 – 100 | 25 | 610 | 6.1 |
| | 20 | HIBIRON K400 0.3% | | pH 6.5 | " | 20 | 3200 | 32.0 |
| | 21 | EDTA 10% HIBIRON K400 0.3% | Morpholine pH 4.5 | not added | 90 – 100 | 25 | 560 | 5.6 |
| | 22 | EDTA 10% HIBIRON K400 0.3% | Cyclohexyl Amine pH 4.5 | not added | 95 – 100 | 25 | 580 | 5.8 |
| | 23 | DTPA 10% HIBIRON K400 0.3% | Diethanol Amine pH 4.5 | not added | 95 – 100 | 25 | 630 | 6.3 |
| | 24 | Citric Acid 10% HIBIRON K400 0.3% | Aqueous Ammonia pH 3.5 | —— | 95 – 100 | 25 | 620 | 6.2 |
| | 25 | Citric Acid 5% Hydroxyacetic Acid 5% HIBIRON K400 0.3% | Aqueous Ammonia pH 3.5 | — | " | " | 680 | 6.8 |
| | 26 | Citric Acid 5% Formic Acid 5% HIBIRON K400 0.3% | — | — | " | " | 730 | 7.3 |

As will be seen from Table-1, the above-described detergent liquids are remarkably excellent as compared to the contrast detergent liquids in that a proportion of solution for steam-oxidized scale is 75 - 99%. It is to be noted that as seen in Contrast No. 20, if the pH is raised up to 6.5 by hydrated hydrazine, the proportion of solution for scale is abruptly lowered to 32%.

In addition. Contrasts Nos. 17, 18, 19, 21, 22 and 23 are examples in which pH adjustment for polyaminocarboxylic acid was effected by means of only a non-reducing amine group alkali agent, and from these contrasts it was discovered that if hydrated hydrazine is not added for joint use, a proportion of solution for steam-oxidized scale is as very low as 7% or less, and the detergent liquid cannot be employed for practical use.

As a second preferred embodiment of the detergent liquid used in the method according to the present invention, a mixture liquid prepared by adding at least one compound selected from a group consisting of aqueous ammonia, ammonia gas, morpholine, cyclohexyl amine, monoethanol amine, diethanol amine and triethanol amine to polyaminocarboxylic acid to adjust its pH to 6.5 - 9.0, further adding hydrated hydrazine to the adjusted liquid to readjust its pH to 7.0 - 9.5 and adding a corrosion inhibitor to the readjusted liquid, is used.

This detergent liquid is circulated through the circulation route shown in Fig. 1 or 2 while being held at a temperature in the range of 120°C - 160°C to remove hardly soluble scale.

As effective polyaminocarboxylic acid in the above-described detergent liquid, ethylenediamine-tetraacetic acid (hereinafter called EDTA), diethylenetriamine-pentaacetic acid (hereinafter called DTPA), nitrotriacetic acid (hereinafter called NTA) and hydroxyethylethylenediamine-tetraacetic acid (hereinafter called HEDTA) are used. A concentration of these polyaminocarboxylic acids is determined depending upon the amount of steam-oxidized scale produced and adhering to the inner surfaces of boiler superheater tubes and main steam tubes, and since it takes 7 - 8 years after start of operation of a boiler until a peel-off phenomenon of steam-oxidized scale arises though it will be different depending upon a steam temperature and a number of times of start and stop, judging the amount of scale on the basis of an elapsed time, 10 - 30 weight % is necessary.

In addition, by adding an amine group alkali agent such as aqueous ammonia, ammonia gas, morpholine, cyclohexyl amine, monoethanol amine, diethanol amine and triethanol amine to the above-described polyaminocarboxylic acid to adjust its pH to 6.5 - 9.0, the polyaminocarboxylic acid is transformed into the form of salt, and thereby it is used as a chelating agent which can easily form chelate with the metal forming the scale. By further adding hydrated hydrazine to the prepared liquid, its pH is readjusted to 7.5 - 9.0.

Furthermore, upon washing by means of the above-described detergent liquid, it is necessary to add a corrosion inhibitor, and as the corrosion inhibitor, any well-known corrosion inhibitor can be appropriately chosen for use, so long as it reveals an adsorption effect for a metal surface and can sufficiently achieve a corrosion inhibit effect. For instance, an organic amine group inhibitor (trade name "HIBIRON K400" manufactured by SUGIMURA Chemical Industry Co., Ltd.) can be named, and its concentration for use of 0.3 weight % is sufficient.

The detergent liquid adjusted in pH in the above-described manner is injected into superheater tubes and main steam tubes in a boiler, and while the detergent liquid is being circulated, hardly soluble scale is solved and removed at a temperature of 120 - 160°C.

It is to be noted that as the pH of the detergent liquid approaches to 7, the washing temperature could be lowered to about 120°C, but at a temperature lower than that temperature a solving power for hardly soluble scale is degraded.

On the other hand, as the pH approaches to 9.5, the hardly soluble scale would become not to be solved sufficiently unless the washing temperature is raised to about 160°C, and if the pH becomes 9.5 or higher, the solving power for scale is remarkably lowered even though the washing temperature is raised to a high temperature.

The mechanism of solving scale by means of the above-described detergent liquid is considered to be such that in view of the fact that the solving power for scale is remarkably enhanced by adding hydrated hydrazine to adjust its pH, since $FeY^-$ (ferric polyaminocarboxylate) produced as a result of scale being solved by chelation effect of polyaminocarboxylate is successively reduced to $FeY^{2-}$ (ferrous polyaminocarboxylate) similarly to the case of the detergent liquid according to the first preferred embodiment, the surface of the scale is always held in a reduced state, and thereby solution of scale by polyaminocarboxylate can be strongly promoted.

500 m$\ell$ of each detergent liquid shown in Table-2 - Table-4 was poured into an autoclave (a stirrable heated pressure vessel of 1$\ell$ in volume and 200 Kg/cm$^2$ in pressure), then 7.0 g (if perfectly solved,10,000 ppm Fe is resulted) of steam-oxidized scale (scale thickness: about 0.5 mm) produced and adhered to the inner surfaces of main steam tubes of a practically used boiler was put in the autoclave, and after a solving test was conducted at the temperature for the time indicated in Table-2 - Table-4 while being continuously stirred, a solved amount of steam-oxidized scale (as Fe) was measured. The results are shown in Table-2 - Table-4.

Similar tests were also conducted for detergent liquids used in the prior art as contrasts, and the test results were compared with each other. The test results are also indicated in Table-2 - Table-4.

As will be seen from Table-2 - Table-4, the above-described detergent liquids according to the second preferred embodiment of the present invention are very excellent as compared to the contrast detergent liquids in that a proportion of solution for steam-oxidized scale is 80 - 99.8%.

On the other hand, the contrasts numbered 1, 5, 10, 14, 17, 22, 25, 28, 32 and 36 are examples in which polyaminocarboxylic acid was adjusted in pH by means of only a non-reducing amine group alkali agent. Unless hydrated hydrazine is not added for joint use, a proportion of solution of steam-oxidized scale is almost as very low as 10% or less, and the contrast liquid cannot be employed for practical use.

It is also obvious that in the case of the contrasts numbered 40 and 41 in which a solution of ammonium citrate was used, a proportion of solution for steam-oxidized scale is very low and the scale can be hardly solved.

Table - 2

| Δ indicates Contrasts. Remainders are Preferred Embodiments.2 | | | | | | | | |
|---|---|---|---|---|---|---|---|---|
| Test Examples | | Composition of Detergent Liquid | | | Washing Temperature (°C) | Washing Time (hr.) | Solved Amount of Steam-Oxidized Scale as Fe (ppm) | Proportion of Solution (%) |
| | | Organic Acid & Inhibitor | pH Adjusting Agent | | | | | |
| | | | Amine Group Alkali Agent | Hydrated Hydrazine | | | | |
| Δ | 1 | NTA 10% HIBIRON K400 0.3% | Aqueous Ammonia pH 6.5 | not added | 160 | 25 | 780 | 7.8 Δ |
| | 2 | | | pH 7.0 | 120 | 20 | 8640 | 86.4 |
| | 3 | | | pH 7.5 | 120 | 20 | 9380 | 93.8 |
| | 4 | | | pH 8.0 | 120 | 20 | 9860 | 98.6 |
| Δ | 5 | EDTA 10% | Aqueous Ammonia pH 6.5 | not added | 160 | 20 | 1260 | 12.6 Δ |
| | 6 | | | pH 7.0 | 120 | 20 | 8800 | 88.0 |
| | 7 | | | pH 8.5 | 120 | 20 | 9920 | 99.2 |
| | 8 | | | pH 9.5 | 160 | 20 | 7200 | 72.0 |
| Δ | 9 | | | pH 9.6 | 160 | 20 | 4360 | 43.6 Δ |
| Δ | 10 | HIBIRON K400 0.3% | Aqueous Ammonia pH 7.5 | not added | 160 | 25 | 860 | 8.6 Δ |
| | 11 | | | pH 8.0 | 140 | 20 | 9120 | 91.2 |
| | 12 | | | pH 8.5 | 140 | 20 | 9640 | 96.4 |
| | 13 | | | pH 9.0 | 150 | 20 | 9950 | 99.5 |

† Continue to Table-2

Δ indicates Contrasts. Remainders are Preferred Embodiments.

Table - 3

| | Test Examples | Composition of Detergent Liquid | | | Washing Temperature (°C) | Washing Time (hr.) | Solved Amount of Steam-Oxidized Scale as Fe (ppm) | Proportion of Solution (%) |
|---|---|---|---|---|---|---|---|---|
| | | Organic Acid & Inhibitor | pH Adjusting Agent | | | | | |
| | | | Amine Group Alkali Agent | Hydrated Hydrazine | | | | |
| Δ | 14 | | Aqueous Ammonia pH 9.0 | not added | 160 | 20 | 780 | 7.8 Δ |
| | 15 | | | pH 9.5 | 160 | 20 | 6400 | 64.0 |
| Δ | 16 | | | pH 9.6 | 160 | 20 | 2980 | 29.8 Δ |
| Δ | 17 | DTPA 10% | Aqueous Ammonia pH 6.5 | not added | 160 | 20 | 1450 | 14.5 Δ |
| | 18 | | | pH 7.0 | 120 | 20 | 8960 | 89.6 |
| | 19 | | | pH 8.5 | 120 | 20 | 9980 | 99.8 |
| | 20 | | | pH 9.5 | 160 | 20 | 7800 | 78.0 |
| Δ | 21 | | | pH 9.6 | 160 | 20 | 4520 | 45.2 Δ |
| Δ | 22 | HIBIRON K400 0.3% | Aqueous Ammonia pH 8.5 | not added | 160 | 25 | 920 | 9.2 Δ |
| | 23 | | | pH 9.0 | 160 | 20 | 8670 | 86.7 |
| | 24 | | | pH 9.5 | 160 | 20 | 8040 | 80.4 |
| Δ | 25 | | Aqueous Ammonia pH 9.0 | not added | 160 | 20 | 880 | 8.8 Δ |
| | 26 | | | pH 9.5 | 160 | 20 | 6850 | 68.5 |
| Δ | 27 | | | pH 9.6 | 160 | 20 | 3060 | 30.6 Δ |

11

Table - 4

↑ Continue to Table-3

Δ indicates Contrasts. Remainders are Preferred Embodiments.

| Test Examples | | Composition of Detergent Liquid | | | Washing Temperature (°C) | Washing Time (hr.) | Solved Amount of Steam Oxidized Scale as Fe (ppm) | Proportion of Solution (%) |
|---|---|---|---|---|---|---|---|---|
| | | Organic Acid & Inhibitor | pH Adjusting Agent | | | | | |
| | | | Amine Group Alkali Agent | Hydrated Hydrazine | | | | |
| Δ | 28 | | Morpholine | not added | 160 | 25 | 840 | 8.4 Δ |
| | 29 | | pH | pH 8.0 | 140 | 20 | 9090 | 90.9 |
| | 30 | | 7.5 | pH 8.5 | 140 | 20 | 9600 | 96.0 |
| | 31 | EDTA 10% | | pH 9.0 | 150 | 20 | 9900 | 99.0 |
| Δ | 32 | HIBIRON K400 0.3% | Cyclohexyl | not added | 160 | 25 | 960 | 9.6 Δ |
| | 33 | | Amine | pH 8.0 | 140 | 20 | 9200 | 92.0 |
| | 34 | | pH | pH 8.5 | 140 | 20 | 9820 | 98.2 |
| | 35 | | 7.5 | pH 9.0 | 150 | 20 | 9950 | 99.5 |
| Δ | 36 | | Diethanol | not added | 160 | 25 | 980 | 9.8 Δ |
| | 37 | DTPA 10% | Amine | pH 8.0 | 140 | 20 | 9280 | 92.8 |
| | 38 | HIBIRON K400 0.3% | pH | pH 8.5 | 140 | 20 | 9890 | 98.9 |
| | 39 | | 7.5 | pH 9.0 | 150 | 20 | 9980 | 99.8 |
| Δ | 40 | Citric Acid 10% | Aqueous Ammonia pH 7.5 | - | 140 | 25 | 540 | 5.4 Δ |
| Δ | 41 | HIBIRON K400 0.3% | Aqueous Ammonia pH 9.0 | - | 140 | 25 | 380 | 3.8 Δ |

EP 0 299 166 A1

As will be apparent from the above description, according to the present invention, since main steam tubes or tube members on the upstream side of the inlet portions of the main steam tubes are cut to form a single loop including only main steam tubes or only main steam tubes and a superheater tube where production of hardly soluble scale is remarkable and a chemical detergent liquid is circulated through the loop to solve and remove the scale, an inherent advantage can be obtained that the scale can be removed surely and perfectly while the detergent liquid is quite insulated from the elements on the side of a boiler which employ materials liable to be subjected to detergent shock such as SUS materials.

In addition, according to the present invention, by circulating the above-described detergent liquid through the main steam tubes or through the main steam tubes and the superheater tube, the following advantage can be attained:

(1) Even for hard, dense and hardly soluble steam-oxidized scale which was impossible to be solved and removed by means of the heretofore known detergent liquid, a solving power is remarkably enhanced and it has become possible to solve and remove such scale.

(2) Since the detergent liquid also has the effect of reducing harmful oxidizing ferric ions ($Fe^{3+}$) which solve out upon washing to harmless ferrous ions ($Fe^{2+}$), corrosion of steel material at the washed surface can be effectively inhibited.

While a principle of the present invention has been described above in connection to preferred embodiments of the invention, it is intended that all matter contained in the above description and illustrated in the accompanying drawings shall be interpreted to be illustrative and not as a limitation to the scope of the invention.

## Claims

1. A method for removing scale on inner surfaces of boiler tube members consisting of the steps of cutting a tube member at least on the upstream side of an inlet portion of a main steam tube on the outlet side of a boiler, temporarily disposing a blocking plate for preventing liquid from flowing into the side of a turbine in a main steam blocking valve on the inlet side of the turbine, thereafter connecting the cut end portion of said cut tube member on the side connected to said main steam blocking valve with one end portion of a temporary piping provided with a circulating pump, connecting the other end of said temporary piping with said main steam blocking valve to form a circulation route by said cut tube member and said temporary piping, and circulating a chemical detergent liquid through said circulation route.

2. A method for removing scale on inner surfaces of boiler tube members as claimed in Claim 1, wherein a detergent liquid is prepared by adding at least one compound selected from a group consisting of aqueous ammonia, ammonia gas, morpholine, cyclohexyl amine, monoethanol amine, diethanol amine and triethanol amine to polyaminocarboxylic acid to adjust its pH to 3.5 - 5.5, further adding hydrated hydrazine to the adjusted liquid to readjust its pH to 4 - 6 and adding a corrosion inhibitor to the readjusted liquid, and the prepared detergent liquid is circulated through said circulation route as said chemical detergent liquid.

3. A method for removing scale on inner surfaces of boiler tube members as claimed in Claim 1, wherein a detergent liquid is prepared by adding at least one compound selected from a group consisting of aqueous ammonia, ammonia gas, morpholine, cyclohexyl amine, monoethanol amine, diethanol amine and triethanol amine to polyaminocarboxylic acid to adjust its pH to 6.5 - 9.0, further adding hydrated hydrazine to the adjusted liquid to readjust its pH to 7.0 - 9.5 and adding a corrosion inhibitor to the readjusted liquid, and the prepared detergent liquid is circulated at a temperature in the range of 120°C - 160°C through said circulation route as said chemical detergent liquid.

# FIG.1

## (a)

## (b)

## (c)

Steam

Turbine

Turbine

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | GB-A-1 198 693 (BERATHERM) <br> * Whole document * <br> --- | 1-3 | F 28 G 9/00 <br> C 23 G 1/08 <br> C 23 G 1/19 <br> C 23 G 1/24 <br> C 02 F 5/08 |
| Y | FR-A-2 264 240 (BENHAIM) <br> * Page 4, lines 1-23; figures 1-3 * <br> --- | 1-3 | |
| A | FR-A-1 267 714 (BORG HOLDING) <br> * Page 2, column 1, lines 6-23; figure 1 * <br> --- | 1-3 | |
| A | DE-A-1 546 085 (BORG HOLDING) <br> * Claims 1-6 * <br> --- | 2,3 | |
| A | GB-A-2 113 254 (DEARBORN CHEMICAL) <br> * Whole document * <br> --- | 2,3 | |
| A | EP-A-0 134 365 (UNION CHIMIQUE ET INDUSTRIELLE DE L'OUEST) <br> * Claims 1,10; abstract * <br> --- | 2,3 | |
| A | US-A-3 297 580 (PITZER) <br> * Whole document * <br> --- | 2,3 | TECHNICAL FIELDS SEARCHED (Int. Cl.4) |
| A | DE-A-2 027 700 (DOW CHEMICAL) <br> * Claims 1-10 * <br> --- | 2,3 | F 28 G <br> F 22 B <br> C 02 F <br> C 23 G |
| A | US-A-4 452 643 (MARTIN) <br> * Claims 1-18 * <br> --- | 2 | |
| A | US-A-1 076 979 (R. TEDESCHI) <br> * Claims 1-6 * <br> --- | 3 | |
| A | FR-A-2 501 357 (PERMO) <br> * Claim 1 * <br> ----- | 1 | |

The present search report has been drawn up for all claims

| Place of search | Date of completion of the search | Examiner |
|---|---|---|
| THE HAGUE | 07-10-1988 | HOERNELL, L.H. |